# EUROPEAN PATENT SPECIFICATION

(11) **EP 4 529 602 B1**
(45) Date of publication and mention of the grant of the patent: **27.05.2026**
(21) Application number: 23751101.9
(22) Date of filing: 17.07.2023
(51) Int. Cl.: F24D 19/10, F24H 15/219, F24H 15/254, F24H 15/31, F24H 15/355, F24H 15/375, G05D 23/19, F24D 11/00

(54) **IMPROVEMENTS TO HEATING SYSTEMS**
VERBESSERUNG EINER HEIZUNGSANLAGE
AMÉLIORATION DES SYSTÈMES DE CHAUFFAGE

(30) Priority: 03.06.2022 GB 202208211; 14.06.2022 GB 202208717
(43) Date of publication of application: 02.04.2025
(73) Proprietor: COP Angel Ltd., Market Bosworth, Nuneaton Leicestershire CV13 0JN (GB)
(72) Inventor: KELLETT, Leroy Michael, Southport Lancashire PR9 0EL (GB)
(74) Representative: You Patent
(86) International application number: PCT/IB2023/057277
(87) International publication number: WO 2023/233388

(56) References cited:
- EP-A1- 3 168 540
- EP-A1- 3 470 745
- EP-B1- 2 912 384

## Description

### Field of the invention

The invention relates to a method of controlling an indoor heating system, an indoor heating system, and a controller for an indoor heating system.

### Background of the invention

Indoor heating systems are ubiquitous because they are essential. Ever since our earliest ancestors huddled around fire pits in the most primitive human dwellings, we have been innovating to make our indoor heating systems cheaper, more efficient, more consistent, safer, and less labour intensive to operate.

Among the modern heating systems in use today, two of the most common are radiators and underfloor heating pipes. Both rely on the transfer of heat from a heat source to an indoor environment by means of a heat transfer fluid, typically water. Throughout this document, all references to water as a heat transfer fluid should be taken to incorporate other heating fluids as well.

In a radiator system, heated water is typically fed into a radiator, which has a high surface area and is made of a thermally conductive material, and thus transfers some of the heat from the water to the surrounding area.

In an underfloor heating system, heated water is typically fed, via a central manifold, into a network of thermally conducting pipes which extend and meander so as to present a very large surface area to the underside of a floor surface in a given room, thus transferring heat from the water to the floor and thence to the air in the room above.

Heat sources in such systems come in many configurations. Gas-fired boilers are particularly common, especially in domestic settings. These usually comprise a tank of water which is heated by exposure to a flame, which is fed by a mains supply of natural gas. In other configurations, the water is heated in smaller volumes, for example by exposing a length of pipe to a flame, and then stored in a buffer tank until required.

Heat pumps are increasing in popularity as an alternative to gas-fired boilers. These use phase change cycles or thermoelectric semiconductors to extract heat from the external environment and supply it to the water.

The efficiency of a heat pump at any given time is the ratio of the amount of energy (usually electrical energy) used by the heat pump to operate, and the amount of heat energy transferred. The amount of heat transferred increases with the amount of energy supplied, up to the maximum power rating of the particular heat pump, but this is not a linear relationship; heat pumps are typically most efficient when operated at small fraction of their maximum power rating.

Prior art heating systems incorporating heat pumps typically heat the water at high power until a thermostat registers that a target ambient temperature has been achieved, and then stops heating the water until the thermostat registers that a second, often lower, target temperature is no longer achieved. This control strategy does not maximise the efficiency of the heat pump.

If a heat pump were to run for a longer period at a lower power, it would be more efficient, that is, it would use less energy to transfer the same amount of heat as the prior art control methods.

Firstly, heat pumps have an inherent efficiency curve, and their peak efficiency is typically toward the lower end of their operating power range.

Secondly, heat pumps are more efficient when operating across lower temperature differences, and so if a heat pump is controlled to heat water to a lower temperature, so that the temperature difference between the heated water and the external environment from which the heat pump draws the heat is lower, the heat pump operates more efficiently.

Thirdly, heat is constantly lost from rooms in any indoor environment, which means that more heat must be provided to the room in order to reach and maintain a target temperature. Heat loss from a room increases with air movement in the room. Since heat is transferred from radiators by convection, constant heating at a lower temperature will cause less convention than periodic heating at a higher temperature, leading to reduced heat loss.

It is therefore desirable to devise a control strategy for an indoor heating system which would achieve and maintain a desired temperature in each room of an indoor environment, while maximising the efficiency of the central heat source.

As described above, the water in indoor heating systems is often heated at a central location, such as a gas-fired boiler or a heat pump, and then pumped around the heating system as required. The route of the water typically forms a circuit, so that it returns to the central location for reheating once it has been pumped around the heating system.

The temperature and pressure of the water varies around the circuit, dependent on a number of factors including distance from the heat source and height relative to the heat source (especially in a multi-storey building). It is therefore important to 'balance' an indoor heating system when installing or maintaining it. The balancing process involves calibrating the water flow rate (or range of flow rates) through each radiator in a radiator system, or through each outlet of a manifold in an underfloor heating system (radiators and underfloor heating pipes will be referred to collectively as 'heat emitters' in the text that follows) so that the flow of water through each heat emitter is the same.

For example, in an unbalanced heating system comprising a boiler, a first radiator and a second radiator, connected by a heated water circuit, the first radiator is likely to be hotter than the second if the first radiator is closer than the second to the boiler. This is, in part, because the water in the heated water circuit has lost more heat and more pressure having travelled farther, by the time it reaches the second radiator. It is also because water flow will be naturally higher to the first radiator, since water flow prefers the path of least resistance. In the prior art, balancing the system would involve gradually reducing the maximum flow of heated water into the first radiator, until trial and error achieves a state wherein the flow of water through the first radiator is as low as the flow of water through the second radiator.

It will be appreciated that this trial-and-error approach is even more difficult and time consuming in systems comprising more than two heat emitters. It is therefore desirable to devise an improved method of balancing an indoor heating system, which is less time consuming, more accurate and more efficient.

Typical radiators are provided with two valves: a first valve on the heated water inlet, which allows a user to control the flow rate of water entering the radiator, and a second valve (often called a lock shield valve) on the heated water outlet, which is used for balancing and then typically covered to prevent inadvertent further adjustment. The range of flow rates through the radiator achievable by adjusting the first valve is determined by the position of the lock shield valve, and in a correctly balanced system with all of the respective first valves open to their maximum extents, the heat output of each radiator will be the same (if all other relevant factors, such as radiator size, are the same).

It would be advantageous to devise a system in which a single valve can provide both balancing (and in particular, automated balancing) and every day control functionality.

EP2912384 discloses a method for operating a heating system, wherein radiator drives are used instead of conventional thermostatic heads.

EP3470745 discloses a system for distributing heat to multiple rooms from a boiler comprising an adjustable valve and a corresponding valve controller for controlling the temperature of each room.

### Summary of the invention

The invention seeks to address at least some of the deficiencies of the prior art identified above, by providing a method of controlling an indoor heating system, with a primary heat source which heats a fluid in a fluid circuit to a target central temperature, and a plurality of heat emitters connected to the fluid circuit, the method comprising the steps of:
a. controlling the fluid flow to or from each respective heat emitter so that the respective vicinity of each heat emitter achieves and maintains a respective target temperature or temperature range;
b. determining the minimum target central temperature, or the minimum heat provided to the fluid by the primary heat source, required to achieve and maintain all of the respective target temperatures or ranges of the respective vicinities of the heat emitters; and
c. setting the target central temperature to said minimum target central temperature, or controlling the primary heat source to provide only said minimum heat to the fluid;
characterised in that the minimum target central temperature or the minimum heat is determined with reference to the highest of the temperatures of the fluid outlets from all of the heat emitters connected to the fluid circuit.

The invention further provides a controller for an indoor heating system, programmed to execute this method.

The invention further provides an indoor heating system comprising a primary heat source which heats fluid in a fluid circuit, a plurality of heat emitters connected to the fluid circuit, a respective remotely actuatable motorised valve at the fluid outlet or inlet of each heat emitter, a temperature sensor at the outlet of each heat emitter, an ambient temperature sensor in the vicinity of each heat emitter, and a controller in control communication with the primary heat source, each of the remotely actuatable motorised valves, and each of the temperature sensors, wherein the controller is programmed to execute the method of any preceding claim.

An instructive example related to the invention provides a system for heating an indoor environment comprising: a primary heat source for heating a heat transfer fluid; at least one remotely actuatable valve for stepped or continuous control of the flow rate of a heat transfer fluid through a return pipe of a heat emitter; a pipe temperature sensor for measuring the temperature of a return pipe of a heat emitter; an electronic controller configured to receive temperature measurement information from each of the pipe temperature sensors, and further configured to provide control instructions to each of the remotely actuatable valves relating to flow rate control; wherein the electronic controller comprises a processor configured to determine the control instructions based at least in part on the temperature measurement information.

Thus the rate of flow of heat transfer fluid through each of the heat emitters of a heating system of the invention can be controlled remotely, based at least in part on the measured temperature of the return outlet pipe temperature measurement which is proportional to the heat transfer fluid return temperature. Thus, by implementing an appropriate control strategy for the remotely actuatable valves at the electronic controller, the system can remotely and automatically balance the radiator system during installation or maintenance. The remotely actuatable valves can thereby fulfil the purpose of lock shield valves in prior art radiator systems, for example.

By implementing another appropriate control strategy for the remotely actuatable valves, the system can automatically make ordinary adjustments to the rate of flow of heat transfer fluid through each of the heat emitters independently, to control the heat emitter temperatures according to the real-time needs of users. The remotely actuatable valves can thereby fulfil the purpose of the first radiator valves described above, for example.

It will be appreciated, therefore, that a newly installed embodiment of the invention involving radiators as heat emitters may only need a single valve rather than two valves per radiator. It may nevertheless be advantageous to provide an additional valve at the inlets of new heat emitters. It will also be appreciated, however, that some embodiments of the invention may be retrofitted to existing heating systems.

Some embodiments further comprise a room temperature sensor for measuring the ambient temperature of an indoor environment. In such embodiments, the temperature measurement information used by the electronic controller includes temperature measurement information from each of the room temperature sensors.

Some embodiments further comprise a user interface for receiving instructions from a user including at least one target ambient temperature.

In some embodiments, the primary heat source is controllable to provide a variable heat output to a heat transfer fluid.

If the primary heat source is a gas-fired boiler, for example, the rate of flow of gas fed to the burner can be adjusted to as to control the heat generated by the flame and supplied to the water. Alternatively, if the primary heat source is a heat pump, it may be an inverter driven heat pump, the power input to which can be adjusted, which in turn adjusts the heat transfer rate of the heat pump.

Embodiments with an adjustable primary heat source provide an additional degree of freedom to the user which, as will be explained below, allows for more efficient modes of operation.

In some such embodiments, the controller is further configured to provide control instructions to the primary heat source relating to the level of heat output.

In embodiments in which the adjustable primary heat source is adjustable by the controller, additional control strategies can be implemented which improve the efficiency of the system. Examples of such strategies will be described below.

In some embodiments, the primary heat source comprises a heat pump, and may comprise an inverter driven heat pump. In other embodiments, the primary heat source comprises a boiler.

Another instructive example related to the invention provides a system for heating an indoor environment comprising: a primary heat source for heating a heat transfer fluid; at least one heat emitter having an inlet and an outlet, in at least one respective region of an indoor environment; a pipe system comprising a flow pipe supplying heat transfer fluid from the primary heat source to the inlet of each of the heat emitters, and a return pipe returning heat transfer fluid from the outlet of each of the heat emitters to the primary heat source; a respective remotely actuatable valve in the return pipe of each of the heat emitters or at the outlet, configured to control, in a stepped or continuous manner, the flow rate of heat transfer fluid through the return pipe; a respective pipe temperature sensor, configured to measure the temperature of the return pipe; an electronic controller configured to receive temperature measurement information from each of the pipe temperature sensors and temperature measurement information from each of the room temperature sensors, and further configured to provide control instructions to each of the remotely actuatable valves relating to flow rate of the heat transfer fluid through the outlet; wherein the electronic controller comprises a processor configured to determine the control instructions based at least in part on the temperature measurement information.

Although the invention may be used with only one heat emitter, it is particularly advantageous to use it with at least two heat emitters.

Some embodiments further comprise a respective room temperature sensor in each region of the indoor environment configured to measure the ambient temperature in the respective region. In such embodiments, the temperature measurement information used by the electronic controller includes temperature measurement information from each of the room temperature sensors.

Some embodiments further comprise a user interface for receiving instructions from a user including a respective target temperature for each region of the indoor environment.

In some embodiments, the primary heat source is controllable to provide a variable heat output to a heat transfer fluid.

In some such embodiments, the controller is further configured to provide control instructions to the primary heat source relating to the level of heat output.

In some embodiments, the primary heat source comprises a heat pump, and may be an inverter driven heat pump. Alternatively, the primary heat source may comprise a boiler.

In some embodiments, at least one of the heat emitters is a radiator. Alternatively or additionally, at least one of the heat emitters may be a branch of an underfloor heating system, in which case the outlet of the branch of the underfloor heating system may be at a manifold, for example at the return inlet from each pipe zone on the manifold.

### Brief description of the drawings

Embodiments of the invention will now be described, by way of example only, with reference to the following drawings.
Figure 1 is a simple block diagram of a heating system according to an embodiment of the invention.
Figure 2 is a simple block diagram of a remotely actuatable valve according to an embodiment of the invention.
Figure 3 is a flow chart of a first control strategy for use with an embodiment of the invention.
Figure 4 is a flow chart of a second control strategy for use with an embodiment of the invention.

### Detailed description

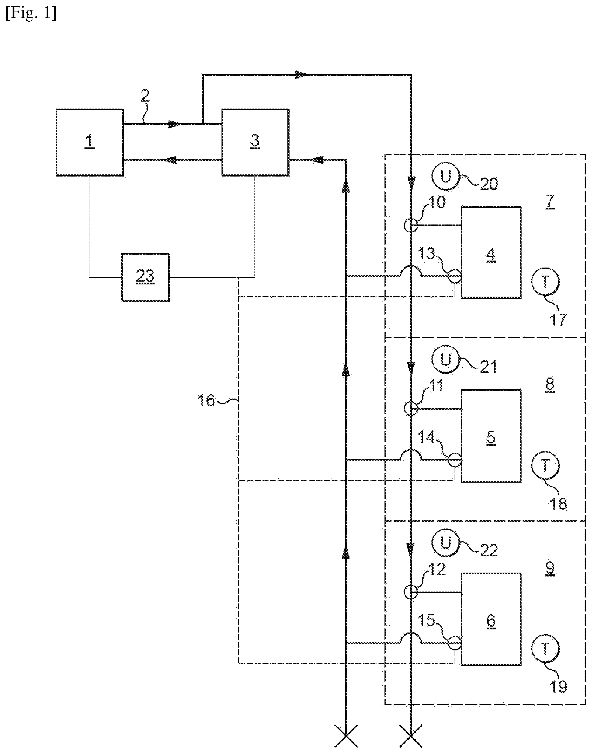

Figure 1 depicts a simple heating system incorporating the invention in block diagram form. The system comprises a primary heat source 1, in this case an inverter driven heat pump. The heat pump is connected to a circuit of heat transfer fluid 2 represented by the solid connecting lines. Typically, the heat transfer fluid will be water. For the sake of clarity, only those components of the system which are useful in explaining the invention are shown in the diagram; such systems typically comprise many more components, such as pumps to cause water to flow through the circuit, which will be well known to the skilled reader.

In the depicted configuration, the heat transfer fluid circuit 2 flows from the heat pump 1 to a buffer tank 3. A motorised buffer tank inlet valve (not shown) serves to selectively stop heated water flowing from the heat pump 1 to the buffer tank 3.

From a junction on the buffer tank side of the buffer tank inlet valve, the circuit 2 flows to each of three radiators 4-6. The buffer tank inlet valve serves to select whether water is supplied to the radiators directly from the heat pump 1 or from the buffer tank 3. Typically, water will be supplied from the buffer tank 3 if and only if the temperature of the water in the buffer tank 3 is at the desired heat supply temperature.

The radiators 4-6 are each in a respective separate room 7-9 of the indoor environment. The radiators 4-6 are connected in parallel. Of course, the invention can be used with any number of radiators, any number of rooms or regions within an indoor environment. Three radiators in three separate rooms is selected here merely to provide an example for understanding the invention.

The inlet of each radiator 4-6 may be controlled by a respective valve 10-12, such as a thermostatic radiator valve. If the invention is installed with the heating system, these valves 10-12 may be omitted. Where the invention is retrofitted to an existing system, it is likely that the valves 10-12 will already be present, although the invention can be used in such a way as to render them unnecessary, as will be described below. If the invention is used to replace the inlet valves 10-12, they may be removed or simply maintained in a fully open position.

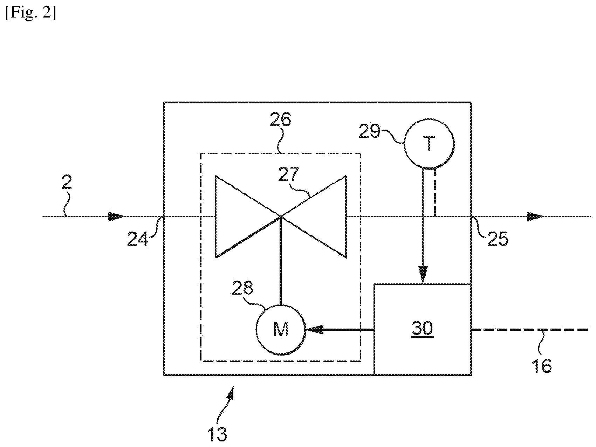

The outlet of each radiator 4-6 is controlled by a respective remotely actuatable valve 13-15 according to the invention. Where the invention is retrofitted to an existing system, it is likely that each outlet will comprise a lock shield valve. As will be described below, the invention can be used in such a way as to render lock shield valves unnecessary, in which case any that are present in the system may be removed, or simply maintained in a fully open position with a remotely actuatable valve 13-15 placed in series. The remotely actuatable valves 13-15 will be described in more detail below, with reference to Figure 2.

The system comprises a communications network 16. The communications network allows the various components of the invention to communicate with one another, sending and receiving information and instructions as will be described below. The communications network may be wireless, or wired, or a combination of both. For example, some or all components in the communications network may communicate using a near field communication system, a wireless internet connection, a cellular network connection, any other wireless or wired communication means, or any combination thereof.

Each room 7-9 also comprises a respective room temperature sensor 17-19. These are configured to measure the ambient temperature in their respective rooms, and to transmit the measurements via the communications network 16, either continuously or periodically. Although these are depicted as separate units from the remotely actuatable valves 13-15, this is not necessarily the case. In some configurations it is possible to incorporate a room temperature sensor 17-19 within the same unit as a remotely actuatable valve 13-15. This may be particularly convenient for retro-fitted embodiments of the invention.

Each room 7-9 may also contain a respective user interface 20-22. These are configured to receive inputs from a user, such as a target or desired temperature for the respective room, and/or a schedule of desired temperatures over the course of a day or week, and to transmit these inputs via the communications network 16. The user interfaces 20-22 may also be configured to receive instructions via the communications network, which may include content to be displayed on a display screen, or information to be relayed audibly via a speaker.

It may be convenient in some embodiments to provide the user interfaces 20-22 and the room temperature sensors 17-19 together in single units for installation in each room 7-9. In other embodiments it may be preferred for them to be provided separately. In certain embodiments, the user interfaces 20-22 and temperature sensors 17-19 may be provided in the same housings or units as the remotely actuatable valves 13-15. In still other embodiments, the user interface may simply be an application on a user's smart device.

A controller 23 is also provided. The controller 23 may be configured to receive information and/or instructions from the communications network 16 and from its own memory storage, to process the information and instructions, and as a result of this processing, to output instructions to the communications network 16.

Although the controller 23 is shown as a single unit within the indoor environment, it should be understood that any suitable control configuration falls within the scope of the invention. The various components of the controller 23, such as memory, microprocessor, interface with the communications network 16, may be distributed throughout the indoor environment, or even beyond the indoor environment, for example using a connection to a cloud computing system.

Examples of control methods executed by the controller 23 will be given below.

Figure 2 represents a remotely actuatable valve 13 of the invention. The remotely actuatable valve 13 is connected to the heat transfer fluid circuit 2, having an inlet 24 connected to the outlet of a radiator 4 and an outlet 25 connected to the heat pump 1. Between the inlet 24 and the outlet 25 is a motor controlled valve 26, comprising a valve 27, controlled by a motor 28, the valve 27 being controllable to move between a fully open position and a fully closed position, and to any position in between, so as to control the flow rate of heat transfer fluid passing through the remotely actuatable valve 13.

The remotely actuatable valve 13 also comprises a pipe temperature sensor 29 arranged to measure the temperature of the heat transfer fluid in the heat transfer fluid circuit 2 after it has passed through the valve 27. It is also configured to provide its temperature readings to a communications interface 30 of the remotely actuatable valve 30, either continuously or periodically.

The communications interface 30 of the remotely actuatable valve is configured to receive the temperature readings from the pipe temperature sensor 29, and to transmit these via the communications network 16. It is further configured to receive instructions via the communications network 16, in particular instructions relating to a desired position of the valve, and to control the motor 28 to move the valve 27 to the desired position.

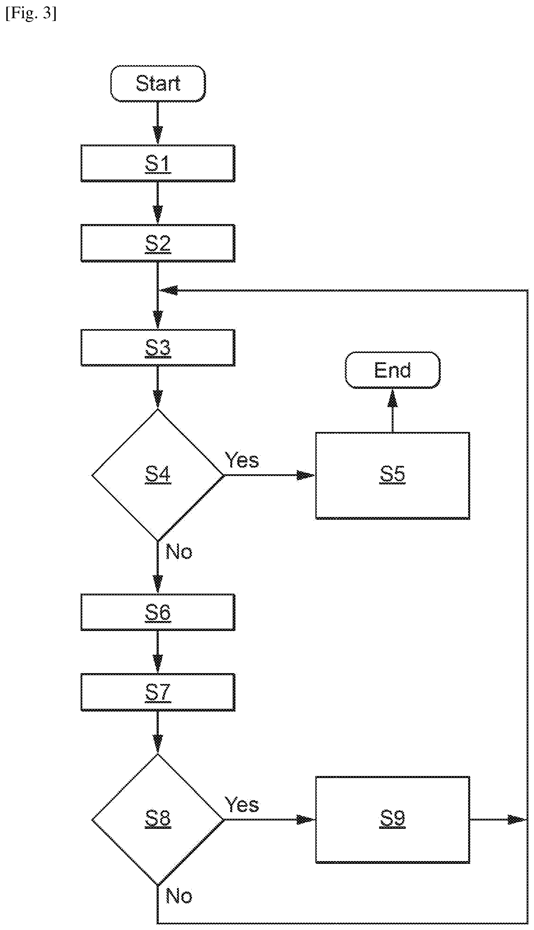

Figure 3 is a method executable by the system depicted in Figures 1 and 2 and described above. This method allows automatic balancing of an indoor heating system. In use, this method should be carried out when the system is first installed, and may need to be repeated occasionally if significant maintenance or alterations are carried out on the system.

At step S1, the controller 23 instructs all remotely actuatable valves 13-15 to open fully, via the communications network 16 and their respective communications interfaces 30. The controller 23 also instructs the inverter driven heat pump 1 to heat the water (the heat transfer fluid) to a temperature defined by parameter 1 in Table 1 below. In order to control the temperature of the water at the heat pump 1, a feedback loop across the communication network 16, including a temperature sensor in a buffer tank, for example, may be provided.

At step S2, the controller waits for a period defined by parameter 2 in Table 1. This gives the radiators 4-6 time to reach a steady state temperature before the next step.

At step S3, each pipe temperature sensor 29 continuously or repeatedly measures the temperature of the water exiting its respective remotely actuatable valve 13-16, and reports it to the controller 23 via the communications network.

At step S4, the controller 23 compares the latest readings from each of the pipe temperature sensors 29 and determines whether they all within a certain range of each other, defined by parameter 3 of Table 1.

If, at step S4, it is determined that the pipe temperature sensor readings are all within the range, the current position of each of the valves 27 is stored in memory as the 'balanced configuration' (step S5). The method then ends.

If, instead, it is determined at step S4 that the pipe temperature sensor readings are not all within range, the method proceeds to step S6.

At step S6, the valve 27 associated with the highest pipe temperature reading is identified and designated in memory as the 'current hottest pipe valve', and is closed by an amount according to parameter 4 in Table 1.

At step S7, the controller waits for a period defined by parameter 2 in Table 1. This is to give the radiators the chance, again, to reach a steady state temperature.

At step S8, the controller 23 receives and compares temperature readings from each of the pipe temperature sensors 29 in the system, and compares them. If it is determined that the 'current hottest pipe valve' identified at step S6 is now, in fact, associated with the lowest reported temperature, it is opened by an amount according to parameter 5 in Table 1 (at step S9). The controller 23 then returns to step S3.

If, instead, it is determined at step S8 that the 'current hottest pipe valve' identified at step S6 is not now associated with the lowest reported temperature, the controller returns directly to step S3.

**Table 1**

| | |
|---|---|
| Parameter 1 | 40 to 60 degrees Celsius. Preferably 50 degrees Celsius. |
| Parameter 2 | 1 to 60 minutes. Preferably 10 minutes. |
| Parameter 3 | Between 1 and 6 degrees Celsius between the maximum and minimum temperatures. Preferably 1 degree Celsius. |
| Parameter 4 | Between 2 and 30%. Preferably 10%. |
| Parameter 5 | Between 2 and 30%. Preferably 5%. |
| Parameter 6 | 5% of the current opened amount. |
| Parameter 7 | Between 1 and 20 degrees Celsius. Preferably 5 degrees Celsius. |
| Parameter 8 | Between 1 and 20 degrees Celsius. Preferably 4 degrees Celsius. |
| Parameter 9 | Between 1 and 7 days. Preferably 2 days. |

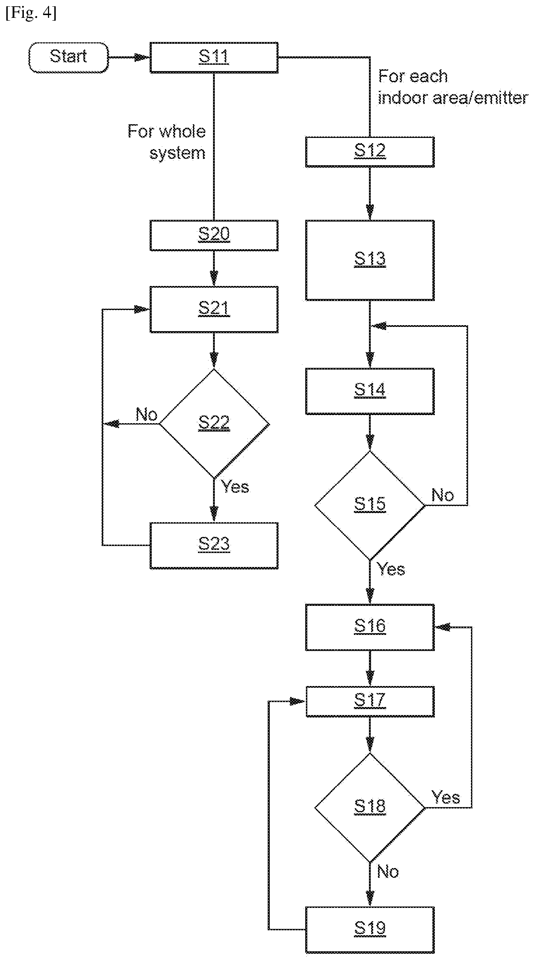

Figure 4 is another method executable by the system depicted in Figures 1 and 2 and described above. It presupposes that a balancing method, such as that shown in Figure 3, has been carried out and a 'balanced configuration' has been stored in memory.

The method starts and, at S11 the controller 23 instructs the inverter driven heat pump 1 to heat the water (the heat transfer fluid) to a temperature defined by parameter 1 in Table 1. In order to control the temperature of the water at the heat pump 1 (and in the buffer tank 3 if one is provided provided), a feedback loop across the communication network 16, including a temperature sensor at the outlet of the heat pump, may be provided.

The method then branches into two. The first branch relates to a method which is applied to each remotely actuatable valve 13-15 and their respective rooms 7-9 independently. The method of the first branch will be described as applying to a single remotely actuatable valve 13 in a single respective room 7, but it should be understood that the same method is being applied simultaneously to all remotely actuatable valves 13-15 in all rooms 7-9. The second branch relates to a method which is applied to the whole system.

The first branch begins at S12. The remotely actuatable valve 13 is set to its balanced position as recorded in the 'balanced configuration'.

At S13, an input 'target temperature' for the room is identified. This may have been entered at a user interface and stored in memory, or may have been selected by a user device in communication with the communications network 16, for example a smart phone.

At S14, the room temperature sensor 17 measures the temperature in the room 7 and transmits this to the communications network 16.

At S15 the controller 23 receives the temperature reading for the room 7 from the communications network 16 and determines whether or not it is greater than or equal to the 'target temperature' identified in step S13

If the room temperature is greater than or equal to the 'target temperature', the method proceeds to step S16. Otherwise it returns to step S14.

At step S16, the remotely actuatable valve 13 is closed by an amount defined in parameter 6 of Table 1.

At step S17, the system waits for a time defined in parameter 2 of Table 1. This gives time for the temperature of the radiator 4 to reach a new steady state after the change to the opening amount of the remotely actuatable valve 13.

At step S18, the room temperature is measured by the room temperature sensor 17 and the reading is compared with the 'target room temperature'. If the room temperature is greater than or equal to the 'target room temperature', the method returns to step S16. Otherwise, the method proceeds to step S19.

At step S19, the remotely actuatable valve 13 is opened by an amount defined in parameter 6 of Table 1, up to a maximum opened amount of the balanced position stored in the 'balanced configuration'. The method then returns to step S17.

For the second branch, which applies to the system as a whole, step S11 process to step S20. At S20, the system waits for a time period defined by parameter 2 of Table 1.

At S21, the pipe temperature sensors 29 measure the temperatures of their respective pipes and communicate the readings to the communications network 16.

At S22, the controller 23 receives the pipe temperature measurements from the communications network 16 and determines whether the highest of the pipe temperature measurements is lower than the temperature to which water is currently heated by the heat pump 1 by at least a margin defined in parameter 7 of Table 1.

The radiator which has the highest return pipe temperature is in the least efficiently heated room. Most likely, this indicates that this room is the least well insulated, or has the most frequently opened doors and windows, or the most air movement, all of which can contribute to the loss of heat from the room. It may also or alternatively indicate that the room is larger compared with the size of the radiator, than other rooms compared with their respective radiators, meaning that the radiator needs to be hotter to heat the room adequately.

If it is determined that the highest pipe temperature is lower than the current water temperature by at least the margin defined in parameter 7 of Table 1, the method proceeds to step S23. Otherwise it repeats S22.

At step S23, the water temperature - that is, the temperature to which the water is heated by the heat pump 1, is set to a temperature greater than the highest pipe temperature determined at S22 by the amount defined in parameter 7 in Table 1. The method then returns to step S22.

The method seeks, thereby, to heat the water using the heat pump 1 only to the level required to satisfy the target temperature in each room, by providing sufficient heat for the worst performing radiator to meet its target, but no more.

Controllers 23 used in some embodiments of the invention preferably monitor the performance of each element of the system in order to recommend upgrades. For example, if the controller 23 determines that the worst performing radiator has a return pipe temperature which deviates from the average return pipe temperature by an amount determined in parameter 8 of Table 1, consistently for a period determined by parameter 9 of Table 1, the controller 23 may communicate a recommendation to a user that said worst performing radiator be replaced or upgraded.

The methods described above use parameters defined in Table 1, and that many of these parameters are defined using ranges and preferred values. The skilled reader will appreciate that a single value for each parameter should be selected for particular implementations of these methods, and should be selected according to the particular circumstances, and may be refined using trial and error or other suitable methods.

The preferred parameters and parameter ranges may differ from those shown in Table 1, and may differ depending on whether the heat emitters are radiators or underfloor heating pipes. For example, it is likely that the time it takes for a change in water temperature to impact the return pipe temperature will differ between radiators and underfloor heating pipes. Nevertheless, a heating system of the invention may comprise both radiators and underfloor heating pipes, since these will be on separate water circuits and thus the methods of the invention can be applied separately to each circuit.

Although the invention has been described with reference to certain preferred embodiments and certain methods of use, these embodiments and methods are not limiting. The invention is limited only by the claims. For example, more sophisticated methods can be used to more efficiently control the central heat source and the remotely actuatable valves. Controllers of the invention may be provided with machine learning capabilities to more accurately predict the effect on the temperatures of the rooms of small changes in the controllable parameters such as valve position. Machine learning may also enable the system to predict the impact of external factors on room temperature, such as heat loss due to lack of insulation, the opening of doors and windows, the time of day, and many other factors, and upon predicting these impacts, make adjustments to pre-empt them.

## Claims

1. A method of controlling an indoor heating system, with a primary heat source (1) which heats a fluid in a fluid circuit (2) to a target central temperature, and a plurality of heat emitters (4, 5, 6) connected to the fluid circuit (2), the method comprising the steps of:
a. controlling the fluid flow to or from each respective heat emitter (4, 5, 6) so that the respective vicinity (7, 8, 9) of each heat emitter (4, 5, 6) achieves and maintains a respective target temperature or temperature range;
b. determining the minimum target central temperature, or the minimum heat provided to the fluid by the primary heat source (1), required to achieve and maintain all of the respective target temperatures or ranges of the respective vicinities (7, 8, 9) of the heat emitters (4, 5, 6); and
c. setting the target central temperature to said minimum target central temperature, or controlling the primary heat source (1) to provide only said minimum heat to the fluid;
**characterised in that** the minimum target central temperature or the minimum heat is determined with reference to the highest of the temperatures of the fluid outlets from all of the heat emitters (4, 5, 6) connected to the fluid circuit (2).

2. A method according to claim 1, comprising the further step of balancing the plurality of heat emitters (4, 5, 6) by adjusting the maximum allowable flow of fluid to or from each of the heat emitters (4, 5, 6), prior to step a.

3. A method according to claim 2, wherein when the fluid flow to or from each respective heat emitter (4, 5, 6) is controlled in step a, it does not exceed the maximum allowable flow of fluid determined during the step of balancing the plurality of heat emitters (4, 5, 6), for any of the plurality of heat emitters (4, 5, 6).

4. A method according to any preceding claim wherein the flow of fluid to or from each heat emitter (4, 5, 6) is increased or decreased by means of a remotely actuatable motorised valve (13, 14, 15).

5. An indoor heating system comprising a primary heat source (1) which heats fluid in a fluid circuit (2), a plurality of heat emitters (4, 5, 6) connected to the fluid circuit (2), a respective remotely actuatable motorised valve (13, 14, 15) at the fluid outlet or inlet of each heat emitter (4, 5, 6), a temperature sensor (29) at the outlet of each heat emitter, an ambient temperature (17, 18, 19) sensor in the vicinity (7, 8, 9) of each heat emitter (4, 5, 6), and a controller (23) in control communication with the primary heat source (1), each of the remotely actuatable motorised valves (13, 14, 15), and each of the temperature sensors (17, 18, 19, 29), wherein the controller (23) is programmed to execute the method of any preceding claim.

6. An indoor heating system according to claim 5, wherein the primary heat source (1) is an inverter-controlled heat pump.

7. An indoor heating system according to claim 5 or claim 6, wherein the plurality of heat emitters (13, 14, 15) includes radiators and/or underfloor heating pipes.

8. A controller for an indoor heating system, programmed to execute the method of any one of claims 1 to 5.

## Patentansprüche

1. Ein Verfahren zur Steuerung einer Raumheizungsanlage mit einer primären Wärmequelle (1), die ein Fluid in einem Fluidkreislauf (2) auf eine Soll-Mitteltemperatur erwärmt, und einer Vielzahl von Wärmeabgabesystemen (4, 5, 6), die mit dem Fluidkreislauf (2) verbunden sind, wobei das Verfahren die folgenden Schritte umfasst:
a. Steuern des Fluidstroms zu oder von jedem jeweiligen Wärmeabgabesystems (4, 5, 6), so dass die jeweilige Umgebung (7, 8, 9) jedes Wärmeabgabesystems (4, 5, 6) eine jeweilige Solltemperatur oder einen jeweiligen Temperaturbereich erreicht und aufrechterhält;
b. Bestimmen der minimalen Soll-Kerntemperatur oder der minimalen Wärme, die dem Fluid von der primären Wärmequelle (1) zugeführt wird, die erforderlich ist, um alle jeweiligen Solltemperaturen oder -bereiche der jeweiligen Umgebungen (7, 8, 9) der Wärmeabgabesystemen (4, 5, 6) zu erreichen und aufrechtzuerhalten; und
c. Einstellen der Soll-Zentraltemperatur auf die genannte minimale Soll-Zentraltemperatur oder Steuern der primären Wärmequelle (1), um dem Fluid nur die genannte minimale Wärme zuzuführen;
**dadurch gekennzeichnet, dass** die minimale Soll-Kerntemperatur oder die minimale Wärmezufuhr unter Bezugnahme auf die höchste der Temperaturen an den Fluidauslässen aller an den Fluidkreislauf (2) angeschlossenen Wärmeabgabesystemen (4, 5, 6) bestimmt wird.

2. Ein Verfahren nach Anspruch 1, umfassend den weiteren Schritt des Ausgleichens der mehreren Wärmeabgabesystemen (4, 5, 6) durch Einstellen des maximal zulässigen Fluidstroms zu oder von jedem der Wärmeabgabesystemen (4, 5, 6) vor Schritt a.

3. Ein Verfahren nach Anspruch 2, wobei, wenn der Fluidstrom zu oder von jedem jeweiligen Wärmeabgabesystem (4, 5, 6) in Schritt a geregelt wird, dieser für keines der mehreren Wärmeabgabesysteme (4, 5, 6) den während des Schritts des Ausgleichens der mehreren Wärmeabgabesysteme (4, 5, 6) ermittelten maximal zulässigen Fluidstrom überschreitet.

4. Ein Verfahren nach einem der vorstehenden Ansprüche, wobei der Fluidstrom zu oder von jedem Wärmeabgabesystem (4, 5, 6) mittels eines ferngesteuerten motorisierten Ventils (13, 14, 15) erhöht oder verringert wird.

5. Ein Innenraumheizsystem, umfassend eine primäre Wärmequelle (1), die Fluid in einem Fluidkreislauf (2) erwärmt, eine Vielzahl von Wärmeabgabesystemen (4, 5, 6), die mit dem Fluidkreislauf (2) verbunden sind, ein jeweiliges ferngesteuertes motorisiertes Ventil (13, 14, 15) am Flüssigkeitsauslass oder -einlass jedes Wärmeabgebers (4, 5, 6), einen Temperatursensor (29) am Auslass jedes Wärmeabgebers, einen Umgebungstemperatursensor (17, 18, 19) in der Nähe (7, 8, 9) jedes Wärmeabgabesystem (4, 5, 6) und eine Steuerung (23) in Steuerverbindung mit der primären Wärmequelle (1), jedem der fernsteuerbaren motorisierten Ventile (13, 14, 15) und jedem der Temperatursensoren (17, 18, 19, 29), wobei die Steuerung (23) so programmiert ist, dass sie das Verfahren eines beliebigen vorangehenden Anspruchs ausführt.

6. Ein Innenraumheizsystem nach Anspruch 5, wobei die primäre Wärmequelle (1) eine invertergesteuerte Wärmepumpe ist.

7. Ein Innenraumheizsystem gemäß Anspruch 5 oder Anspruch 6, wobei die Vielzahl von Wärmeabgabesystemen (13, 14, 15) Heizkörper und/oder Fußbodenheizungsrohre umfasst.

8. Eine Steuerung für ein Innenraumheizsystem, die so programmiert ist, dass sie das Verfahren eines der Ansprüche 1 bis 5 ausführt.

## Revendications

1. A procédé de contrôle d'un système de chauffage intérieur, avec une source de chaleur principale (1) qui chauffe un fluide dans un circuit de fluide (2) à une température centrale cible, et une pluralité d'émetteurs de chaleur (4, 5, 6) connectés au circuit de fluide (2), le procédé comprenant les étapes suivantes :
a. contrôler le débit de fluide vers ou depuis chaque émetteur de chaleur respectif (4, 5, 6) de sorte que l'environnement respectif (7, 8, 9) de chaque émetteur de chaleur (4, 5, 6) atteigne et maintienne une température cible respective ou une plage de températures cible respective ;
b. déterminer la température centrale cible minimale, ou la chaleur minimale fournie au fluide par la source de chaleur principale (1), nécessaire pour atteindre et maintenir toutes les températures cibles respectives ou les plages de températures respectives des environnements respectifs (7, 8, 9) des émetteurs de chaleur (4, 5, 6) ; et
c. régler la température centrale cible sur ladite température centrale cible minimale, ou contrôler la source de chaleur principale (1) pour ne fournir au fluide que ladite chaleur minimale ;
**caractérisé en ce que** la température centrale cible minimale ou la chaleur minimale est déterminée par référence à la plus élevée des températures des sorties de fluide de l'ensemble des émetteurs de chaleur (4, 5, 6) connectés au circuit de fluide (2).

2. Un procédé selon la revendication 1, comprenant l'étape supplémentaire d'équilibrage de la pluralité d'émetteurs de chaleur (4, 5, 6) en ajustant le débit maximal autorisé de fluide vers ou depuis chacun des émetteurs de chaleur (4, 5, 6), préalablement à l'étape a.

3. Un procédé selon la revendication 2, dans lequel lorsque le débit de fluide vers ou depuis chaque émetteur de chaleur respectif (4, 5, 6) est contrôlé à l'étape a, il ne dépasse pas le débit maximal autorisé de fluide déterminé lors de l'étape d'équilibrage de la pluralité d'émetteurs de chaleur (4, 5, 6), pour aucun des émetteurs de chaleur de la pluralité (4, 5, 6).

4. Un procédé selon l'une quelconque des revendications précédentes, dans lequel le débit de fluide vers ou depuis chaque émetteur de chaleur (4, 5, 6) est augmenté ou diminué au moyen d'une vanne motorisée à commande à distance (13, 14, 15).

5. Un système de chauffage intérieur comprenant une source de chaleur principale (1) qui chauffe un fluide dans un circuit de fluide (2), une pluralité d'émetteurs de chaleur (4, 5, 6) connectés au circuit de fluide (2), une vanne motorisée à commande à distance respective (13, 14, 15) au niveau de la sortie ou de l'entrée de fluide de chaque émetteur de chaleur (4, 5, 6), un capteur de température (29) à la sortie de chaque émetteur de chaleur, un capteur de température ambiante (17, 18, 19) dans l'environnement (7, 8, 9) de chaque émetteur de chaleur (4, 5, 6), et un contrôleur (23) en communication de contrôle avec la source de chaleur principale (1), chacune des vannes motorisées à commande à distance (13, 14, 15), et chacun des capteurs de température (17, 18, 19, 29), dans lequel le contrôleur (23) est programmé pour exécuter le procédé selon l'une quelconque des revendications précédentes.

6. Un système de chauffage intérieur selon la revendication 5, dans lequel la source de chaleur principale (1) est une pompe à chaleur à onduleur.

7. Un système de chauffage intérieur selon la revendication 5 ou la revendication 6, dans lequel la pluralité d'émetteurs de chaleur (13, 14, 15) comprend des radiateurs et/ou des tuyaux de chauffage par le sol.

8. Un contrôleur pour un système de chauffage intérieur, programmé pour exécuter le procédé selon l'une quelconque des revendications 1 à 5.
